# EUROPÄISCHE PATENTANMELDUNG

(11) **EP 3 715 719 A1**
(43) Veröffentlichungstag der Anmeldung: **30.09.2020**
(21) Anmeldenummer: 20163295.7
(22) Anmeldetag: 16.03.2020
(51) Int. Cl.: F24C 7/08, G01K 1/02

(54) **GARGERÄT UND VERFAHREN ZUM BETREIBEN EINES GARGERÄTES**

(30) Priorität: 26.03.2019 DE 102019107733
(71) Anmelder: Miele & Cie. KG, 33332 Gütersloh (DE)
(72) Erfinder: Nelson, Helge, 48231 Warendorf (DE)

(57) **Zusammenfassung**

Die vorliegende Erfindung betrifft ein Gargerät (1) mit einem Garraum (11) und mit einer Behandlungseinrichtung (2) zur Zubereitung von Gargut in dem Garraum (11) und mit einer Steuereinrichtung (3) zur Steuerung der Behandlungseinrichtung (2). Die Steuereinrichtung (3) ist dazu geeignet und ausgebildet ist, eine Temperatur des Garguts zu berücksichtigen, welche mittels einer Messsonde (4) mit einem in das Gargut einstechbaren Messstellenabschnitt (14) mit einer Messstelle (24) während eines Garprozesses im Garraum (11) erfassbar ist. Dabei ist eine Überwachungseinrichtung (5) zur Überwachung einer Einstechposition der Messsonde (4) in dem Gargut mittels einer Kameraeinrichtung (15) vorgesehen. Die Überwachungseinrichtung (5) ist dazu geeignet und ausgebildet ist, eine Fehlpositionierung der Messsonde (4) im Gargut zu erkennen.

## Beschreibung

Die vorliegende Erfindung betrifft ein Gargerät und ein Verfahren zum Betreiben eines Gargeräts mit wenigstens einem Garraum und mit wenigstens einer Behandlungseinrichtung zur Zubereitung von Gargut in dem Garraum. Das Gargerät umfasst wenigstens eine Steuereinrichtung zur Steuerung der Behandlungseinrichtung, welche dazu geeignet und ausgebildet ist, wenigstens eine Temperatur des Garguts zu berücksichtigen, welche mittels wenigstens einer Messsonde während eines Garprozesses im Garraum erfassbar ist.

Für ein optimales Garergebnis ist es in der Regel entscheidend, bestimmte Eigenschaften des Garguts zu berücksichtigen bzw. zu überwachen. Beispielsweise sind Informationen darüber, wie weit das Gargut im Verlauf des Garprozesses bereits gegart wurde, besonders wichtig für einen zuverlässigen Ablauf von Automatikprogrammen. In der Regel wird dazu eine mit dem Gargerät wirkverbundene Messsonde, auch als Messspieß bezeichnet, in das Gargut eingestochen. So können die Kerntemperatur bzw. eine Temperatur im Inneren des Garguts erfasst und darüber der Garzustand überwacht werden.

Für eine sichere Bestimmung der Kerntemperatur ist es jedoch entscheidend, dass die Messsonde so eingestochen wird, dass sie möglichst durch den Kern des Garguts läuft. Ansonsten kann die Kerntemperatur als Zielgröße für die niedrigste Temperatur im Lebensmittel nicht korrekt erfasst werden. Die gemessene Temperatur ist dann meist höher als die niedrigste Temperatur im Lebensmittel. Dadurch kann der Garprozess zu früh abgebrochen werden und das Lebensmittel ist im ungünstigsten Fall noch roh.

Demgegenüber ist es die Aufgabe der vorliegenden Erfindung, die Verwendung einer Messsonde für ein Gargerät zu verbessern. Insbesondere soll der Problematik eines fehlerhaften Einstechens der Messsonde entgegengewirkt werden.

Diese Aufgabe wird gelöst durch ein Gargerät mit den Merkmalen des Anspruchs 1 sowie durch ein Verfahren mit den Merkmalen des Anspruchs 14. Bevorzugte Merkmale sind Gegenstand der Unteransprüche. Weitere Vorteile und Merkmale ergeben sich aus der allgemeinen Beschreibung der Erfindung und der Beschreibung der Ausführungsbeispiele.

Das erfindungsgemäße Gargerät, insbesondere ausgebildet als Backofen, umfasst wenigstens einen Garraum und wenigstens eine Behandlungseinrichtung zur Zubereitung von Gargut in den Garraum. Das Gargerät umfasst wenigstens eine Steuereinrichtung zur Steuerung der Behandlungseinrichtung. Die Steuereinrichtung ist dazu geeignet und ausgebildet, wenigstens eine Temperatur, insbesondere Innentemperatur, des Garguts zu berücksichtigen. Die Temperatur ist mittels wenigstens einer Messsonde während eines Garprozesses im Garraum erfassbar. Die Messsonde umfasst wenigstens einen in das Gargut einstechbaren Messstellenabschnitt mit wenigstens einer Messstelle. Dabei umfasst das Gargerät wenigstens eine Überwachungseinrichtung zur Überwachung einer Einstechposition der Messsonde in dem Gargut mittels wenigstens einer Kameraeinrichtung. Die Überwachungseinrichtung ist dazu geeignet und ausgebildet, wenigstens eine Fehlpositionierung der Messsonde im Gargut zu erkennen.

Das erfindungsgemäße Gargerät bietet viele Vorteile. Einen erheblichen Vorteil bieten die Überwachung der Einstechposition und die Erkennung einer Fehlpositionierung der Messsonde mittels der Kameraeinrichtung. Dadurch kann zuverlässig und unaufwendig erkannt werden, wenn die Messsonde falsch in das Gargut eingestochen wurde und es somit zu einer nicht korrekten Erfassung der Temperatur im Inneren des Garguts kommen könnte. So kann beispielsweise zuverlässig verhindert werden, dass das Gargut nicht optimal zubereitet wird und dass der Garprozess zu früh abgebrochen wird. Die Kameraeinrichtung bietet dabei eine kostenoptimierte technische Umsetzung der Überwachung.

Als Kameraeinrichtung kann eine Kamera, aber auch andere bildgebende Verfahren verwendet werden.

Vorzugsweise ist die Überwachungseinrichtung dazu geeignet und ausgebildet, mittels der Kameraeinrichtung wenigstens einen Griffabschnitt der Messsonde und/oder wenigstens einen außerhalb des Garguts liegenden Messstellenabschnitt zu erkennen. Insbesondere ist die Übertragungseinrichtung dazu geeignet und ausgebildet, den Griffabschnitt von dem Messstellenabschnitt unterscheiden. Die Überwachungseinrichtung ist insbesondere dazu geeignet und ausgebildet, abhängig von einer Position des Griffabschnitts bzw. des außerhalb des Garguts liegenden Messstellenabschnitts die Fehlpositionierung zu erkennen. Das bietet eine besonders zuverlässige Erkennung von Fehlpositionierungen. Insbesondere wird mittels der Überwachungseinrichtung abhängig von der Position des Griffabschnitts bzw. des außerhalb des Garguts liegenden Messstellenabschnitts eine Einstechlänge des Messstellenabschnitts im Gargut und/oder ein Einstechwinkel und/oder wenigstens ein anderer geometrischer Lageparameter der Messsonde abgeleitet. Vorzugsweise wird aus der Position des Messstellenabschnitts bzw. des Griffabschnitts ermittelt, ob die wenigstens eine Messstelle innerhalb des Garguts oder außerhalb des Garguts liegt. Insbesondere wird eine Fehlpositionierung erkannt, wenn die wenigstens eine Messstelle außerhalb des Garguts liegt. Insbesondere ist eine Geometrie der Messsonde in der Überwachungseinrichtung hinterlegt. So kann die Überwachungseinrichtung die Geometrie der Messsonde bei der Auswertung berücksichtigen. Beispielsweise können der Winkel zwischen dem Messstellenabschnitt und dem Griffabschnitt und/oder eine Länge des Messstellenabschnitts und/oder des Griffabschnitts in der Überwachungseinrichtung hinterlegt sein. Möglich ist auch, dass eine Kontur, Form, Länge, Breite und/oder wenigstens eine andere Information über die Messsonde in der Überwachungseinrichtung hinterlegt ist.

Die Überwachungseinrichtung ist insbesondere dazu geeignet und ausgebildet, die Fehlpositionierung der Messsonde im Gargut wenigstens dann zu erkennen, wenn wenigstens ein Mindestteil des Messstellenabschnitts außerhalb des Garguts angeordnet ist. Die Überwachungseinrichtung ist insbesondere dazu geeignet und ausgebildet, eine korrekte Einstechposition der Messsonde im Gargut wenigstens dann zu erkennen, wenn wenigstens ein Mindestteil des Messstellenabschnitts innerhalb des Garguts angeordnet ist. Eine solche Ausgestaltung ist besonders vorteilhaft und bietet eine besonders verlässliche Überwachung der Einstechposition. Der dazu notwendige Mindestteil kann abhängig von einer Gargutgröße und/oder einer anderen Kenngröße für die Geometrie des Garguts festgelegt sein. Möglich ist auch, dass ein Wert für den Mindestteil hinterlegt ist. Insbesondere ist Überwachungseinrichtung dazu geeignet und ausgebildet, eine Länge und/oder wenigstens eine andere geometrische Eigenschaft des Mindestteils des Messstellenabschnitts zu berücksichtigen, um zwischen einer Fehlpositionierung und einer korrekten Einstechposition zu unterscheiden.

In einer bevorzugten Ausgestaltung ist die Überwachungseinrichtung dazu geeignet und ausgebildet, eine Anzahl der an dem Messstellenabschnitt angeordneten Messstellen zu berücksichtigen und mittels der Kameraeinrichtung die Anzahl der in dem Gargut angeordneten Messstellen zu bestimmen. Eine solche Ausgestaltung ist besonders vorteilhaft, da die Anzahl der Messstellen im Gargut einen erheblichen Einfluss auf eine korrekte Temperaturerfassung hat. Die Anzahl der an dem Messstellenabschnitt angeordneten Messstellen ist insbesondere der Überwachungseinrichtung hinterlegt.

Vorzugsweise ist die Überwachungseinrichtung dazu geeignet und ausgebildet, wenigstens eine Messsonde mit einem Messstellenabschnitt mit wenigstens zwei und vorzugsweise mit einer Mehrzahl von Messstellen zu überwachen. Beispielsweise können drei, vier, fünf oder sechs oder auch acht oder zehn oder mehr Messstellen vorgesehen sein.

Besonders bevorzugt ist die Überwachungseinrichtung dazu geeignet und ausgebildet, eine korrekte Einstechposition der Messsonde im Gargut wenigstens dann zu erkennen, wenn eine Mindestanzahl von Messstellen innerhalb des Garguts angeordnet ist. Das bietet eine zuverlässige Überwachung, da für eine korrekte Temperaturerfassung ausreichend Messstellen im Gargut angeordnet sein sollten. Insbesondere ist die Überwachungsseinsrichtung dazu geeignet und ausgebildet, eine Fehlpositionierung wenigstens anzuerkennen, wenn eine maximale Anzahl von Messstellen außerhalb des Garguts überschritten wird.

Die Überwachungseinrichtung kann auch dazu geeignet und ausgebildet sein, eine korrekte Einstechposition der Messsonde im Gargut wenigstens dann zu erkennen, wenn wenigstens eine von wenigstens zwei Messstellen des Messstellenabschnitts innerhalb des Garguts angeordnet ist. Besonders bevorzugt erkennt die Überwachungseinrichtung eine korrekte Einstechposition dann, wenn wenigstens zwei von wenigstens drei und/oder wenn wenigstens drei von einer Mehrzahl von Messstellen im Gargut angeordnet sind. Insbesondere wird eine korrekte Einstechposition erkannt, wenn mehr als die Hälfte der Messstellen und insbesondere wenn mehr als zwei Drittel der Messstellen im Gargut angeordnet sind.

In einer vorteilhaften Weiterbildung ist die Überwachungseinrichtung dazu geeignet und ausgebildet, die Mindestanzahl von Messstellen innerhalb des Garguts abhängig von einer hinterlegten Gargutgröße abzuleiten. Dadurch kann gewährleistet werden, dass sowohl für größere Bratenstücke als auch für Steaks oder dergleichen eine zuverlässige Überwachung erfolgt. Beispielsweise wird eine Höhe bzw. Stärke des Garguts berücksichtigt. Es kann auch das Gewicht oder Volumen berücksichtigt werden. Die Gargutgröße oder eine dafür stellvertretende Angabe kann beispielsweise über ein Menü eingegeben werden. Möglich ist auch, dass die Gargutgröße wenigstens teilweise automatisch erfasst wird.

Für die Bestimmung der Mindestanzahl von Messstellen innerhalb des Garguts berücksichtigt die Überwachungseinrichtung insbesondere den Zusammenhang, dass für eine Erkennung einer korrekten Einstechposition umso weniger Messstellen im Gargut liegen müssen, je niedriger bzw. dünner das Gargut ist. Damit eine korrekte Einstechposition erkannt wird, müssen insbesondere umso mehr Messstellen im Gargut liegen, je höher bzw. der stärker das Gargut ist.

Es ist möglich, dass die Überwachungseinrichtung dazu geeignet und ausgebildet ist, mittels der Kameraeinrichtung wenigstens eine Kenngröße für eine Geometrie des Garguts zu ermitteln und die Mindestanzahl von Messstellen innerhalb des Garguts abhängig von der Kenngröße festzulegen. Eine solche Ausgestaltung ist für den Benutzer besonders komfortabel. Möglich ist auch, dass die maximale Anzahl von Messstellen außerhalb des Garguts abhängig von der Kenngröße festgelegt wird. Die Kenngröße beschreibt beispielsweise eine Höhe bzw. Stärke und/oder die Breite und/oder Länge und/oder Kontur bzw. Form des Garguts. Die Kenngröße kann auch das Volumen und/oder das Gewicht und/oder wenigstens eine andere geometrische Eigenschaft des Garguts beschreiben. Es ist möglich, dass die Kenngröße für die Geometrie des Garguts bei der Bestimmung der Einstechposition und beispielsweise des Winkels und/oder der Einstechtiefe und/oder eines anderen geometrischen Lageparameters des Messstellenabschnitts in Bezug zu dem Gargut herangezogen wird. Möglich ist auch, dass die Mindestanzahl und/oder maximale Anzahl fest in der Überwachungseinrichtung hinterlegt ist. Die Mindestanzahl und/oder maximale Anzahl kann auch durch eine Benutzereingabe einstellbar sein.

Die Überwachungseinrichtung kann dazu geeignet und ausgebildet sein, mittels der Kameraeinrichtung eine Position eines Kernpunktbereichs des Garguts zu bestimmen. Der Kernpunktbereich ist insbesondere dadurch gekennzeichnet, dass dieser eine maximale Entfernung von der Gargutoberfläche aufweist. Der Kernpunktbereich liegt insbesondere in einem Zentrum des Garguts. Der Kernpunktbereich umfasst insbesondere die geringste Temperatur im Inneren des Garguts. Im Kernpunktbereich liegt insbesondere eine Kerntemperatur vor, welche der niedrigsten im Inneren des Garguts vorliegenden Temperatur entspricht. Zur Bestimmung des Kernpunktbereichs erfasst die Kameraeinrichtung vorzugsweise wenigstens eine Größe für die Geometrie des Garguts.

Vorzugsweise ist die Überwachungseinrichtung dazu geeignet und ausgebildet, mittels der Kameraeinrichtung aus einer Positionierung wenigstens eines außerhalb des Garguts liegenden Teils der Messsonde, insbesondere wenigstens eines Griffabschnitts, eine Positionierung des innerhalb des Garguts angeordneten Messstellenabschnitts abzuleiten. So kann über den außerhalb des Garguts liegenden Teil der Messsonde auch der nicht sichtbar im Inneren liegende Teil erkannt werden kann. Insbesondere ist Überwachungseinrichtung dazu geeignet und ausgebildet, die Positionierung des innerhalb des Garguts angeordneten Messstellenabschnitts mit der Position des Kernpunktbereichs zu vergleichen. So kann festgestellt werden, ob der Messstellenabschnitt auch im Kernpunktbereich liegt oder wenigstens in dessen Nähe. Dazu sind in der Überwachungseinrichtung vorzugsweise Informationen über die Geometrie der Messsonde und insbesondere des Messstellenabschnitts hinterlegt.

In einer vorteilhaften und bevorzugten Ausgestaltung ist Überwachungseinrichtung dazu geeignet und ausgebildet, eine korrekte Einstechposition der Messsonde abhängig davon zu erkennen, ob eine Überschneidung eines innerhalb des Garguts angeordneten Teils des Messstellenabschnitts mit dem Kernpunktbereich oberhalb eines Schwellenwertes liegt. Insbesondere ist die Überwachungseinrichtung dazu geeignet und ausgebildet, eine Fehlpositionierung der Messsonde abhängig davon zu erkennen, ob eine Überschneidung des innerhalb des Garguts angeordneten Teils des Messstellenabschnitts mit dem Kernpunktbereich unterhalb eines Schwellenwertes liegt. Insbesondere wird erkannt, ob eine Überschneidung wenigstens einer Messstelle mit dem Kernpunktbereich oberhalb bzw. unterhalb eines Schwellenwertes liegt. Das bietet eine besonders verlässliche Kontrolle der Einstechposition, da eine ausreichende Überschneidung des Messstellenabschnitts mit dem Kernpunktbereich eine besonders sichere und genaue Erfassung der Kerntemperatur ermöglicht. So kann bei einer Überschneidung oberhalb des Schwellenwertes davon ausgegangen werden, dass tatsächlich auch die Kerntemperatur erfasst wird. Der Schwellenwert ist vorzugsweise in der Überwachungseinrichtung hinterlegt. Es ist möglich, dass der Schwellenwert abhängig von der Gargutgröße und/oder von der Kenngröße für die Geometrie des Garguts festgelegt bzw. angepasst wird.

Insbesondere ist Überwachungseinrichtung dazu geeignet und ausgebildet, mittels der Kameraeinrichtung räumliche Bildinformationen zu erfassen und daraus eine Geometrie des Garguts zu bestimmen. Dabei ist die Kameraeinrichtung insbesondere als 3D-Kamera ausgebildet. Das ermöglicht eine besonders verlässliche Überwachung der Einstechposition. Zudem wird dadurch eine reproduzierbare Bestimmung des Kernpunktbereichs erreicht. Beispielsweise kann aus den räumlichen Bildinformationen ein Volumen und/oder eine Form bzw. Kontur und/oder Höhe und/oder Länge und/oder Breite des Garguts bestimmt werden.

Insbesondere ist die Überwachungseinrichtung dazu geeignet und ausgebildet, aus den räumlichen Bildinformationen die Position des Kernpunktbereichs zu bestimmen. Insbesondere ist Überwachungseinrichtung dazu geeignet und ausgebildet, aus den räumlichen Bildinformationen die Einstechposition der Messsonde in dem Gargut zu bestimmen. Insbesondere werden die räumlichen Bildinformationen bzw. die Geometrie des Garguts bei der Bestimmung des Einstechwinkels und/oder der Einstechtiefe und/oder eines anderen geometrischen Lageparameters des Messstellenabschnitts im Gargut berücksichtigt bzw. herangezogen. Aus den räumlichen Bildinformationen kann auch die Kenngröße für die Geometrie des Garguts ermittelt werden. Möglich ist auch, dass die Kameraeinrichtung zur Erfassung zweidimensionaler Bildinformationen ausgebildet ist. Dann ist die Position des Kernpunktbereichs und/oder die Einstechposition der Messsonde in dem Gargut und/oder die Kenngröße für die Geometrie des Garguts insbesondere aus zweidimensionalen Bildinformationen ableitbar.

Es ist möglich, dass aus den räumlichen Bildinformationen wenigstens ein Abstand des Garguts zur Kameraeinrichtung bestimmt wird. Insbesondere wird aus dem Abstand wenigstens näherungsweise eine Höhe des Garguts bestimmt. Insbesondere wird aus den Bildinformationen eine Flächenausdehnung des Garguts bestimmt. Aus der Flächenausdehnung wird wenigstens eine Grundfläche des Garguts bestimmt. Aus der Grundfläche und der Höhe wird vorzugsweise das Volumen des Garguts bestimmt.

In allen Ausgestaltungen ist es bevorzugt, dass die Überwachungseinrichtung dazu geeignet und ausgebildet ist, wenigstens bei einer Erkennung einer Fehlpositionierung der Messsonde wenigstens einen Hinweis auszugeben. Beispielsweise umfasst der Hinweis eine Aufforderung auf eine erneute bzw. korrigierte Positionierung der Messsonde. Vorzugsweise erfolgt nach der neuen Positionierung eine erneute Überwachung der Einstechposition. Der Hinweis kann optisch und/oder akustisch und/oder haptisch erfolgen. Der Hinweis kann über eine Anzeigeeinrichtung des Gargeräts und/oder über ein externes Gerät und beispielsweise ein Tablet oder Smartphone ausgegeben werden. Es kann auch bei einer Erkennung einer korrekten Positionierung der Messsonde wenigstens ein Hinweis ausgegeben werden. Die Überwachungseinrichtung kann auch dazu geeignet und ausgebildet sein, bei einer Erkennung einer Fehlpositionierung der Messsonde die mit der Messsonde erfasste Temperatur bei der Steuerung der Behandlungseinrichtung nicht oder nur teilweise zu berücksichtigen.

Das Gargerät umfasst vorzugsweise wenigstens eine Messsonde. Die Messsonde ist insbesondere wie zuvor beschrieben ausgebildet. Die Messsonde umfasst insbesondere wenigstens einen in das Gargut einstechbaren Messstellenabschnitt mit wenigstens einer Messstelle zur Erfassung einer Temperatur im Inneren des Garguts. Insbesondere umfasst die Messsonde wenigstens einen Griffabschnitt. Insbesondere umfasst die Messsonde wenigstens zwei Messstellen und vorzugsweise eine Mehrzahl von Messstellen. Beispielsweise sind an dem Messstellenabschnitt drei, vier, fünf oder sechs oder auch acht oder zehn oder mehr Messstellen angeordnet. Die Messstelle der Messsonde umfasst insbesondere wenigstens einen Temperatursensor.

Insbesondere wird mit der Messsonde eine Temperatur im Inneren des Garguts erfasst und der Steuereinrichtung bereitgestellt. Die Messsonde dient insbesondere zur Erfassung einer Kerntemperatur des Garguts. Insbesondere ist die Messsonde mit der Steuereinrichtung wirkverbunden. Beispielsweise kann eine kabellose oder auch eine drahtgebundene Verbindung zwischen der Steuereinrichtung und der Messsonde vorgesehen sein. Insbesondere ist die Steuereinrichtung dazu geeignet und ausgebildet, die Behandlungseinrichtung abhängig von der mittels der Messsonde erfassten Temperatur im Inneren des Garguts anzusteuern.

Das erfindungsgemäße Verfahren dient zum Betreiben eines Gargeräts mit wenigstens einem Garraum und mit wenigstens einer Behandlungseinrichtung zur Zubereitung von Gargut in dem Garraum. Dabei umfasst das Gargerät wenigstens eine Steuereinrichtung zur Steuerung der Behandlungseinrichtung. Die Steuereinrichtung kann wenigstens eine Temperatur des Garguts berücksichtigen, welche mittels wenigstens einer Messsonde mit wenigstens einem in das Gargut eingestochen Messstellenabschnitt mit wenigstens einer Messstelle während eines Garprozesses im Garraum erfasst wird. Dabei wird mittels wenigstens einer Überwachungseinrichtung mit wenigstens einer Kameraeinrichtung eine Einstechposition der Messsonde in dem Gargut überwacht. Dadurch ist wenigstens eine Fehlpositionierung der Messsonde im Gargut erkennbar.

Auch das erfindungsgemäße Verfahren bietet viele Vorteile und ermöglicht einen erheblich verbesserten Einsatz der Messsonde des Gargeräts. Insbesondere wird das zuvor beschriebene erfindungsgemäße Gargerät nach dem erfindungsgemäßen Verfahren betrieben.

Insbesondere ist die Überwachungseinrichtung dazu geeignet und ausgebildet, mittels der Kameraeinrichtung Bildinformationen des Garguts und der Messsonde im Garraum zu erfassen. Insbesondere ist die Überwachungseinrichtung dazu geeignet und ausgebildet, die Bildinformationen des Garguts und der Messsonde auszuwerten. Insbesondere ist die Überwachungseinrichtung dazu geeignet und ausgebildet, mittels der Kameraeinrichtung vom Gargut ausgehende Bildinformationen zu erkennen und von Bildinformationen zu unterscheiden, welche von außerhalb des Garguts bzw. vom Garraum ausgehen. Die Überwachungseinrichtung ist insbesondere mit der Steuereinrichtung wirkverbunden. Möglich ist, dass die Überwachungseinrichtung ein Teil der Steuereinrichtung ist oder diese bereitstellt.

Es ist besonders vorteilhaft, wenn nach dem Erkennen der Fehlpositionierung der Messsonde eine Aufforderung zu einem erneuten Einstechen der Messsonde erfolgt. Dabei kann das Gerät, beispielsweise auf einem Display, eine Hilfestellung zum richtigen Einstechen geben.

Im Rahmen der vorliegenden Erfindung wird unter einer Einstechposition beispielsweise der Einstichort im Gargut, eine Einstechhaltung bzw. ein Einstechwinkel, eine Einstechtiefe im Gargut und/oder eine Einstechlänge des Messstellenabschnitts verstanden. Die Einstechposition kann auch weitere Parameter zur Beschreibung der Position der Messsonde im Gargut umfassen.

Weitere Vorteile und Merkmale der vorliegenden Erfindung ergeben sich aus den Ausführungsbeispielen, welche im Folgenden mit Bezug auf die beiliegenden Figuren erläutert werden.

In den Figuren zeigen:
- Figur 1: eine rein schematische Darstellung eines erfindungsgemäßen Gargerätes in einer Vorderansicht; und
- Figur 2: eine stark schematische Darstellung eines Temperaturprofils in einem Gargut.

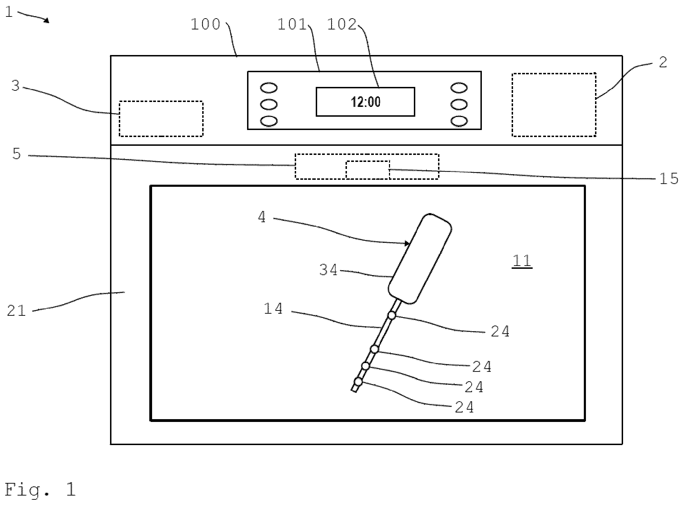

Figur 1 zeigt ein erfindungsgemäßes Gargerät 1, welches hier als ein Backofen 100 ausgeführt ist. Das Gargerät 1 wird nach dem erfindungsgemäßen Verfahren betrieben. Das Gargerät 1 hat einen beheizbaren Garraum 11, welcher durch eine Garraumtür 21 verschließbar ist. Das Gargerät 1 ist hier als ein Einbaugerät vorgesehen. Es kann auch als ein Standgerät ausgebildet sein.

Zur Zubereitung von Gargut ist eine Behandlungseinrichtung 2 vorgesehen, die in der hier dargestellten Ansicht nicht sichtbar im Garraum 11 bzw. Geräteinneren angeordnet ist. Die Behandlungseinrichtung 2 umfasst z. B. eine Heizeinrichtung mit mehreren Heizquellen für die Beheizung des Garraums 11. Als Heizquelle können beispielsweise eine Oberhitze und/oder eine Unterhitze, eine Heißluftheizquelle und/oder eine Grillheizquelle oder andere Arten von Heizquellen vorgesehen sein. Es kann auch ein Dampferzeuger vorgesehen sein. Zudem kann die Behandlungseinrichtung 2 zum Erhitzen bzw. Garen mit Hochfrequenzstrahlung ausgebildet sein und dazu wenigstens einen Hochfrequenzerzeuger umfassen.

Das Gargerät 1 umfasst hier eine mit der Behandlungseinrichtung 2 wirkverbundene Steuereinrichtung 3 zur Steuerung bzw. Regelung von Gerätefunktionen und Betriebszuständen. Über die Steuereinrichtung 3 sind vorwählbare Betriebsmodi und vorzugsweise auch verschiedene Garprogramme bzw. Programmbetriebsarten und andere Automatikfunktionen ausführbar. Die Steuereinrichtung 3 steuert dazu z. B. die Behandlungseinrichtung 2 in Abhängigkeit eines vorgewählten Betriebsmodus bzw. Garprogramms entsprechend an.

Zur Bedienung des Gargerätes 1 ist eine Bedieneinrichtung 101 vorgesehen. Beispielsweise können darüber der Betriebsmodus, die Garraumtemperatur und/oder ein Automatikprogramm bzw. eine Programmbetriebsart oder andere Automatikfunktionen ausgewählt und eingestellt werden. Über die Bedieneinrichtung 101 können auch weitere Benutzereingaben vorgenommen werden und zum Beispiel eine Menüsteuerung vorgenommen werden. Die Bedieneinrichtung 101 umfasst auch eine Anzeigeeinrichtung 102, über die Benutzerhinweise und z. B. Eingabeaufforderungen angezeigt werden können. Die Bedieneinrichtung 101 kann Bedienelemente und/oder eine berührungsempfindliche Anzeigeeinrichtung 102 bzw. einen Touchscreen umfassen.

Im Garraum 11 befindet sich hier eine Messsonde 4 zur Erfassung einer Innen- bzw. Kerntemperatur des Garguts. So kann der Garzustand während des Garprozesses anhand der Kerntemperatur überwacht werden, z. B. bei Fleisch wie Schweinebraten oder Roastbeef. Dazu verbleibt die eingestochene Messsonde 4 während des Garvorgangs im Garraum 11. Die erfassten Temperaturen werden drahtlos oder kabelgebunden an die Steuereinrichtung 3 übermittelt, welche die Temperaturen zur Überwachung des Garzustands und zur Gerätesteuerung einsetzt. Die Temperaturinformation kann genutzt werden, um die Garraum- bzw. Ofentemperatur zu regeln oder einen Fertigzeitpunkt zu bestimmen, um den Garvorgang automatisch zu beenden. Es kann sich ein Schnellabkühlen oder Warmhalten anschließen.

Die Messsonde 4 weist einen Messstellenabschnitt 14 auf, welcher in das Gargut eingestochen wird. Zum Messen der Temperatur umfasst der Messstellenabschnitt 14 hier eine Mehrzahl von Messstellen 24, welche z. B. jeweils einen Temperatursensor aufweisen. Es kann auch nur eine Messstelle 24 vorgesehen sein. Zum sicheren Festhalten beim Einstechen weist die Messsonde 4 hier einen Griffabschnitt 34 auf.

Zur Überwachung einer Einstechposition der Messsonde 4 im Gargut ist hier eine Überwachungseinrichtung 5 mit einer Kameraeinrichtung 15 vorgesehen. Die Überwachungseinrichtung 5 wertet dazu die von der Kameraeinrichtung 15 erfassten Bildinformationen aus und erkennt eine Fehlpositionierung der Messsonde 4 im Gargut.

Die Überwachung der Einstechposition erfolgt beispielsweise vor dem Start des Garprozesses, wenn das Gargut im Garraum 11 platziert und die Messsonde 4 eingestochen ist. Die Überwachung kann auch während des Garprozesses fortgesetzt bzw. erfolgen werden. So kann beispielsweise erkannt werden, wenn die Messsonde 4 während des Garprozesses im Gargut verrutscht bzw. aus diesem herausfällt.

Wird erkannt, dass die Messsonde 4 nicht korrekt bzw. ungünstig eingestochen ist, kann zum Beispiel mit der Anzeigeeinrichtung 102 ein Hinweis ausgegeben werden, dass ein erneutes Einstechen notwendig ist. Dazu können auch Hinweise angezeigt werden, wie die Messsonde 4 am besten platziert werden kann. Anschließend erfolgt eine erneute Überprüfung der Einstechposition. Wenn die Messsonde 4 richtig eingestochen ist, kann der Garprozess beginnen. Falls noch immer eine Fehlpositionierung vorliegt, kann erneut der Hinweis ausgegeben werden.

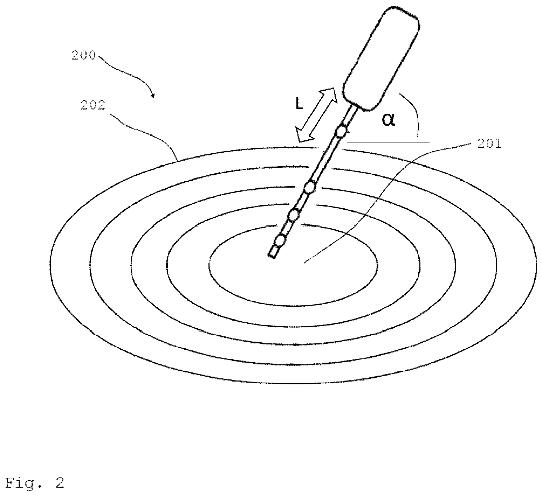

Die Figur 2 zeigt ein Temperaturprofil 200 eines Garguts bzw. Lebensmittels 202 und beispielsweise eines Bratens. Im Inneren des Lebensmittels 202 liegt ein Kernpunktbereich 201, welcher das Zentrum des Lebensmittels 202 darstellt. Der Kernpunktbereich 201 liegt hier so, dass er eine maximale Entfernung von der Gargutoberfläche aufweist. Durch diese Position treten in dem Kernpunktbereich 201 beim Garen die niedrigsten Temperaturen innerhalb des Garguts auf. Die Temperatur im Gargut steigt während des Garprozesses durch Wärmeleitung von außen nach innen an. Zur verlässlichen Überwachung der Kerntemperatur sollte die Messsonde 4 also so eingestochen werden, dass wenigstens eine der Messstellen 24 im Kernpunktbereich 201 liegt.

Mithilfe der Kameraeinrichtung 15 (2D-Kamera oder 3D-Kamera) wird zum Beispiel die Form des Lebensmittels 202 und somit auch der Kernpunkt bestimmt. Im Lebensmittel 202 kann zu jedem Zeitpunkt die Temperaturverteilung durch Höhenlinien bzw. Schalen, welche wie die Kontur des Lebensmittels geformt sind, beschrieben werden. In dem Temperaturprofil 200 sind solche Linien eingezeichnet. Diese Linien stellen einen Schnitt durch das dreidimensionale Lebensmittel dar.

In einem Beispiel kann die Kameraeinrichtung 15 wenigstens zwei Arten von Fehlstechen erkennen. Erstens kann ein offensichtliches Fehlstechen erkannt werden. Das liegt z. B. dann vor, wenn zusätzlich zum Griffabschnitt 34 Teile des Messstellenabschnitts 14 zu sehen sind und dabei insbesondere auch Messstellen 24 außerhalb des Garguts liegen. Zweitens kann eine nicht mittig eingestochene Messsonde 4 erkannt werden. Dabei ist der Messstellenabschnitt 14 zwar ausreichend bzw. vollständig ins Lebensmittel 202 eingestochen, durchsticht aber nicht den Kernpunktbereich 201 des Lebensmittels 202.

Um die erste Art zu erkennen, wird z. B. geprüft, ob sich alle bzw. genug Messstellen 24 im Lebensmittel 202 befinden. Die Form des Lebensmittels 202 wird dabei vorzugsweise ermittelt und berücksichtigt. Falls ein dünnes Steak gegart wird, reicht es aus, wenn wenigstens zwei Messstellen im Fleisch angeordnet sind.

Um die zweite Art zu erkennen, wird z. B. aus den Bildinformationen hauptsächlich des Griffabschnitts 34 eine Berechnung durchgeführt, wo sich der Messstellenabschnitt 14 im Lebensmittel 202 befindet. Die Größe und Geometrie der Messsonde 4 einschließlich Messstellenabschnitt 14, Messstellen 24 und Griffabschnitt 34 ist der Überwachungseinrichtung 5 bekannt. Aus dem Bild des Lebensmittels 202 kann der Kernpunktbereich 201 berechnet und mit der berechneten Position der Messsonde 4 bzw. des Messstellenabschnitts 14 verglichen werden. Sollten Kernpunktbereich 201 und berechnete Spießposition mehr als ein Schwellwert auseinanderliegen, kann die Überwachungseinrichtung 5 den Nutzer warnen und auffordern, die Messsonde 4 erneut bzw. besser platziert einzustechen.

Die hier vorgestellte Erfindung bietet die Möglichkeit, ein Fehlstechen des Spießes bzw. der Messsonde 4 mittels Berechnung zu korrigieren. Mithilfe einer Kamera 15 wird die Form des Lebensmittels aufgenommen und mit der Einstich-Position des Spießes 4 abgeglichen. So kann eine ein offensichtliches Fehlstechen erkannt und der Nutzer gewarnt werden. So kann der Spieß 4 erneut und besser platziert eingestochen werden.

### Bezugszeichenliste

- 1: Gargerät
- 2: Behandlungseinrichtung
- 3: Steuereinrichtung
- 4: Messsonde
- 5: Überwachungseinrichtung
- 11: Garraum
- 14: Messstellenabschnitt
- 15: Kameraeinrichtung
- 21: Garraumtür
- 24: Messstelle
- 34: Griffabschnitt
- 100: Backofen
- 101: Bedieneinrichtung
- 102: Anzeigeeinrichtung
- 200: Temperaturprofil
- 201: Kernpunktbereich
- 202: Lebensmittel

## Patentansprüche

1. Gargerät (1) mit wenigstens einem Garraum (11) und mit wenigstens einer Behandlungseinrichtung (2) zur Zubereitung von Gargut in dem Garraum (11) und mit wenigstens einer Steuereinrichtung (3) zur Steuerung der Behandlungseinrichtung (2), wobei die Steuereinrichtung (3) dazu geeignet und ausgebildet ist, wenigstens eine Temperatur des Garguts zu berücksichtigen, welche mittels wenigstens einer Messsonde (4) mit wenigstens einem in das Gargut einstechbaren Messstellenabschnitt (14) mit wenigstens einer Messstelle (24) während eines Garprozesses im Garraum (11) erfassbar ist,
**gekennzeichnet**
**durch** wenigstens eine Überwachungseinrichtung (5) zur Überwachung einer Einstechposition der Messsonde (4) in dem Gargut mittels wenigstens einer Kameraeinrichtung (15) und dass die Überwachungseinrichtung (5) dazu geeignet und ausgebildet ist, wenigstens eine Fehlpositionierung der Messsonde (4) im Gargut zu erkennen.

2. Gargerät (1) nach dem vorhergehenden Anspruch, **dadurch gekennzeichnet, dass** die Überwachungseinrichtung (5) dazu geeignet und ausgebildet ist, mittels der Kameraeinrichtung (15) wenigstens einen Griffabschnitt (34) der Messsonde (4) und/oder wenigstens einen außerhalb des Garguts liegenden Messstellenabschnitt (14) zu erkennen und abhängig von einer Position des Griffabschnitts (34) bzw. des außerhalb des Garguts liegenden Messstellenabschnitts (14) die Fehlpositionierung zu erkennen.

3. Gargerät (1) nach einem der vorhergehenden Ansprüche, **dadurch gekennzeichnet, dass** die Überwachungseinrichtung (5) dazu geeignet und ausgebildet ist, die Fehlpositionierung der Messsonde (4) im Gargut wenigstens dann zu erkennen, wenn wenigstens ein Mindestteil des Messstellenabschnitts (14) außerhalb des Garguts angeordnet ist und/oder dass die Überwachungseinrichtung (5) dazu geeignet und ausgebildet ist, eine korrekte Einstechposition der Messsonde (4) im Gargut wenigstens dann zu erkennen, wenn wenigstens ein Mindestteil des Messstellenabschnitts (14) innerhalb des Garguts angeordnet ist.

4. Gargerät (1) nach einem der vorhergehenden Ansprüche, **dadurch gekennzeichnet, dass** die Überwachungseinrichtung (5) dazu geeignet und ausgebildet ist, eine Anzahl der an dem Messstellenabschnitt (14) angeordneten Messstellen (24) zu berücksichtigen und mittels der Kameraeinrichtung (15) die Anzahl der im Gargut angeordneten Messstellen (24) zu bestimmen.

5. Gargerät (1) nach dem vorhergehenden Anspruch, **dadurch gekennzeichnet, dass** die Überwachungseinrichtung (5) dazu geeignet und ausgebildet ist, eine korrekte Einstechposition der Messsonde (4) im Gargut wenigstens dann zu erkennen, wenn eine Mindestanzahl von Messstellen (24) innerhalb des Garguts angeordnet ist.

6. Gargerät (1) nach dem vorhergehenden Anspruch, **dadurch gekennzeichnet, dass** die Überwachungseinrichtung (5) dazu geeignet und ausgebildet ist, die Mindestanzahl von Messstellen (24) innerhalb des Garguts abhängig von einer hinterlegten Gargutgröße abzuleiten.

7. Gargerät (1) nach einem der beiden vorhergehenden Ansprüche, **dadurch gekennzeichnet, dass** die Überwachungseinrichtung (5) dazu geeignet und ausgebildet ist, mittels der Kameraeinrichtung (15) wenigstens eine Kenngröße für eine Geometrie des Garguts zu ermitteln und die Mindestanzahl von Messstellen (24) innerhalb des Garguts abhängig von der Kenngröße festzulegen.

8. Gargerät (1) nach einem der vorhergehenden Ansprüche, **dadurch gekennzeichnet, dass** die Überwachungseinrichtung (5) dazu geeignet und ausgebildet ist, mittels der Kameraeinrichtung (15) eine Position eines Kernpunktbereichs (201) des Garguts zu bestimmen und dass der Kernpunktbereich (201) eine maximale Entfernung von der Gargutoberfläche aufweist.

9. Gargerät (1) nach dem vorhergehenden Anspruch, **dadurch gekennzeichnet, dass** die Überwachungseinrichtung (5) dazu geeignet und ausgebildet ist, mittels der Kameraeinrichtung (15) aus einer Positionierung wenigstens eines außerhalb des Garguts liegenden Teils der Messsonde (4), insbesondere wenigstens eines Griffabschnitts (34), eine Positionierung des innerhalb des Garguts angeordneten Messstellenabschnitts (14) abzuleiten und mit der Position des Kernpunktbereichs (201) zu vergleichen.

10. Gargerät (1) nach dem vorhergehenden Anspruch, **dadurch gekennzeichnet, dass** die Überwachungseinrichtung (5) dazu geeignet und ausgebildet ist, eine korrekte Einstechposition der Messsonde (4) abhängig davon zu erkennen, ob eine Überschneidung eines innerhalb des Garguts angeordneten Teils des Messstellenabschnitts (14), insbesondere eine Überschneidung wenigstens einer Messstelle (24), mit dem Kernpunktbereich (201) oberhalb eines Schwellenwerts liegt.

11. Gargerät (1) nach einem der vorhergehenden Ansprüche, **dadurch gekennzeichnet, dass** die Überwachungseinrichtung (5) dazu geeignet und ausgebildet ist, mittels der Kameraeinrichtung (15), insbesondere ausgebildet als 3D-Kamera, räumliche Bildinformationen zu erfassen und daraus eine Geometrie des Garguts zu bestimmen.

12. Gargerät (1) nach einem der vorhergehenden Ansprüche, **dadurch gekennzeichnet, dass** die Überwachungseinrichtung (5) dazu geeignet und ausgebildet ist, wenigstens bei einer Erkennung einer Fehlpositionierung der Messsonde (4) wenigstens einen Hinweis auszugeben.

13. Gargerät (1) nach einem der vorhergehenden Ansprüche, **dadurch gekennzeichnet**, umfassend wenigstens eine Messsonde (4).

14. Verfahren zum Betreiben eines Gargeräts (1) mit wenigstens einem Garraum (11) und mit wenigstens einer Behandlungseinrichtung (2) zur Zubereitung von Gargut in dem Garraum (11) und mit wenigstens einer Steuereinrichtung (3) zur Steuerung der Behandlungseinrichtung (2), wobei die Steuereinrichtung (3) wenigstens eine Temperatur des Garguts berücksichtigen kann, welche mittels wenigstens einer Messsonde (4) mit wenigstens einem in das Gargut eingestochenen Messstellenabschnitt (14) mit wenigstens einer Messstelle (24) während eines Garprozesses im Garraum (11) erfasst wird,
**dadurch gekennzeichnet,**
**dass** mittels wenigstens einer Überwachungseinrichtung (5) mit wenigstens einer Kameraeinrichtung (15) eine Einstechposition der Messsonde (4) in dem Gargut überwacht wird, sodass wenigstens eine Fehlpositionierung der Messsonde (4) im Gargut erkennbar ist.

15. Verfahren zum Betreiben eines Gargeräts (1) nach dem vorhergehenden Anspruch, **dadurch gekennzeichnet, dass** nach dem Erkennen der Fehlpositionierung der Messsonde (4) eine Aufforderung zu einem erneuten Einstechen der der Messsonde (4) erfolgt.
